# FASCICULE DE BREVET EUROPEEN

(11) **EP 2 911 894 B1**
(45) Date de publication et mention de la délivrance du brevet: **06.12.2017**
(21) Numéro de dépôt: 13779237.0
(22) Date de dépôt: 18.10.2013
(51) Int. Cl.: B60C 11/12, B60C 11/04, B60C 11/03

(54) **BANDE DE ROULEMENT ÉVOLUTIVE**
ENTWICKLUNGSFÄHIGER LAUFSTREIFEN
TREAD CAPABLE OF EVOLVING

(30) Priorité: 24.10.2012 FR 1260105
(43) Date de publication de la demande: 02.09.2015
(73) Titulaire: Compagnie Générale des Etablissements Michelin, 63000 Clermont-Ferrand (FR)
(72) Inventeur: GAYTON, Christophe, F-63040 Clermont-Ferrand Cedex 9 (FR); REHAB, Hichem, F-63040 Clermont-Ferrand Cedex 9 (FR); DEMAZIERE, Guillaume, F-63040 Clermont-Ferrand Cedex 9 (FR)
(74) Mandataire: Diernaz, Christian
(86) Numéro de dépôt international: PCT/EP2013/071882
(87) Numéro de publication internationale: WO 2014/064015

(56) Documents cités:
- WO-A1-2010/133940
- JP-A- H1 178 433
- JP-A- 2001 199 206

## Description

### DOMAINE DE L'INVENTION

La présente invention concerne les bandes de roulement de pneus pour véhicules poids lourd que ce soit sur essieu directeur ou sur essieu moteur et plus particulièrement les bandes de roulement comprenant au moins une rainure disparaissant avant usure complète de la bande, cette usure complète correspondant à une usure légale à partir de laquelle un changement de pneu ou de la bande par rechapage doit être effectué.

### ÉTAT DE LA TECHNIQUE

Les demanderesses ont développé de nouveaux pneus pourvus de bandes de roulement évolutives avec usure. Pour de telles bandes, il est formé un volume de cavité s'ouvrant à l'état neuf sur la surface de roulement de la bande correspondant à la surface de la bande destinée à venir en contact avec la chaussée lors d'un roulage. Sur ces mêmes bandes il est en outre formé un volume de creux ne s'ouvrant pas sur la surface de roulement à l'état neuf mais après une usure déterminée. Les rainures ont notamment pour rôle de permettre à l'eau de s'écouler tout en maintenant la matière formant la bande en contact avec ladite chaussée.

Pour améliorer encore la performance sur chaussée mouillée, il est connu de pourvoir les bandes avec une pluralité d'incisions génératrices d'arêtes additionnelles, ces incisions se refermant au moins en partie lors du passage dans le contact afin de limiter la perte de rigidité liée à chaque incision.

Il est connu par le document US2821231 une bande de roulement comprenant quatre rainures circonférentielles (c'est-à-dire longitudinales) délimitant cinq nervures. Ces nervures sont pourvues d'une pluralité d'incisions d'orientation transversale, ces incisions s'ouvrant dans les rainures. En outre ces incisions sont formées de manière à - au moins dans la partie centrale de la bande - s'étendre radialement au-dessous des fonds des rainures. Si une telle disposition est intéressante, il n'en demeure pas moins qu'elle n'est pas totalement satisfaisante, notamment sur le plan de la rigidité de la bande dans la direction transversale.

Le document WO 2010/133940 A1 montre une bande de roulement selon le préambule de la revendication 1.

### Définitions :

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux faible indique une grande surface de contact de la bande de roulement et une faible surface de creux entre les éléments de relief.

Le taux de creux volumique d'une sculpture d'une bande de roulement à l'état neuf est égal au rapport entre le volume des creux (formés notamment par des rainures, des cavités) délimités par les éléments de relief (blocs, nervures) et le volume total de la bande de roulement comprenant le volume de matière à user et le volume des creux. Un taux de creux volumique faible indique un faible volume de creux relativement au volume de la bande de roulement. Pour chaque niveau d'usure, on peut également définir un volume de creux.

Plan médian équatorial : c'est un plan perpendiculaire à l'axe de rotation et passant par les points du pneu radialement les plus éloignés dudit axe.

Un bloc est un élément en relief formé sur la bande de roulement qui est délimité par des creux ou rainures et comprenant des parois latérales et une face de contact destinée à venir en contact avec la chaussée.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle ou longitudinale, on entend une direction qui est tangente à tout cercle centré sur l'axe de rotation. Cette direction est perpendiculaire à la fois à la direction axiale et à une direction radiale.

Par axialement vers l'extérieur, on entend une direction qui est orientée vers l'extérieur de la cavité interne du pneu.

Par radialement vers l'intérieur, on entend une direction qui est orientée vers l'axe de rotation du pneu.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale PMU de matière à user en roulage, cette épaisseur maximale PMU est en générale inférieure à l'épaisseur totale E.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage. Chaque découpure a une profondeur qui est inférieure à l'épaisseur E de la bande afin de conserver de la matière radialement au-dessus de l'armature de sommet.

### BREF EXPOSÉ DE L'INVENTION

La présente invention vise à obtenir une bande de roulement pour pneu de véhicule poids lourd comprenant une sculpture dite évolutive et se régénérant au fur et à mesure de son usure tout en assurant les fonctions essentielles requises pour une bonne sécurité en roulage, notamment une bonne tenue de route en virage sur chaussée sèche et sur chaussée revêtue d'eau ainsi qu'une bonne performance en usure.

À cet effet, l'invention a pour objet une bande de roulement selon la revendication 1.

La direction de la rainure doit être interprétée ici comme la direction moyenne d'un écoulement d'eau lors d'un roulage sur chaussée revêtue d'eau notamment par temps de pluie.

Préférentiellement, la profondeur des parties de liaison est au moins égale à 90% de la profondeur P1 des rainures principales.

Avantageusement, la bande de roulement est telle que la profondeur des rainures secondaires est au moins égale à 50% de l'épaisseur de matière à user (PMU) et au plus égale à 90% de la même épaisseur PMU.

Dans une variante de l'invention, la bande de roulement est caractérisée en ce que chaque portion d'incision orientée suivant ou sensiblement suivant la direction principale de la rainure secondaire est délimitée par des parois en vis-à-vis, ces parois étant pourvues de moyens de blocage limitant ainsi la diminution de la rigidité de la bande occasionnée par la présence des incisions.

Il est bien entendu possible de pourvoir l'ensemble des parois délimitant chaque incision de moyens de blocage : forme en zigzag, présence de cavités et reliefs coopérant ensemble.

Afin de réduire les concentrations d'effort dans la partie d'extrémité de l'incision radialement sous les fonds des rainures secondaires, il est judicieux de prévoir que chaque partie de liaison soit pourvue à son extrémité radialement à l'intérieur d'un élargissement. Cet élargissement a une largeur supérieure à la largeur de l'incision et peut prendre toute forme en section.

Afin de limiter la diminution de la rigidité de la bande selon l'invention, les parties latérales s'étendent jusqu'à une distance mesurée par rapport à la surface de roulement à l'état neuf qui est au plus égale à la profondeur de la rainure secondaire.

Afin que l'effet sur la rigidité soit sensible, il est judicieux que la longueur suivant ou sensiblement suivant la direction principale de la rainure secondaire de chaque partie de liaison soit au moins égale à 5 mm et encore plus préférentiellement au moins égale à 10 mm.

Dans une autre variante de l'invention, la bande de roulement est caractérisée en ce qu'elle est pourvue d'au moins un dispositif indicateur de l'usure limite légale et en ce que chaque partie de liaison des incisions s'étend jusqu'à une profondeur correspondant à la position de l'usure limite légale déterminée par ledit dispositif. Par « correspondant à la position de l'usure limite », on entend une profondeur au moins égale à cette limite.

Cette dernière disposition est intéressante dès lors qu'il n'est pas nécessaire de réaliser des incisions ayant sur toutes leurs parties une profondeur proche de l'épaisseur PMU. Ainsi, il est possible de limiter la réduction de rigidité liée à la présence d'une pluralité d'incisions. La présence d'une partiel de liaison d'incision s'ouvrant sur le fond des rainures secondaires permet - après disparition des rainures secondaires- de conserver une bonne performance en adhérence sur chaussée humide aussi bien dans le sens transversal que dans le sens longitudinal.

L'invention concerne en outre un pneu destiné à équiper un véhicule poids lourd, ce pneu étant pourvu d'une bande de roulement telle que décrite dans le présent document.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en perspective d'une partie d'une bande de roulement selon l'invention ;
La figure 2 représente une vue en plan à l'état neuf de la bande de roulement montrée à la figure 1 ;
La figure 3 montre une vue en plan de la bande de roulement montrée avec la figure 1 après une usure ayant fait totalement disparaître une rainure secondaire ;
La figure 4 montre une vue en perspective d'une autre variante d'une bande de roulement selon l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

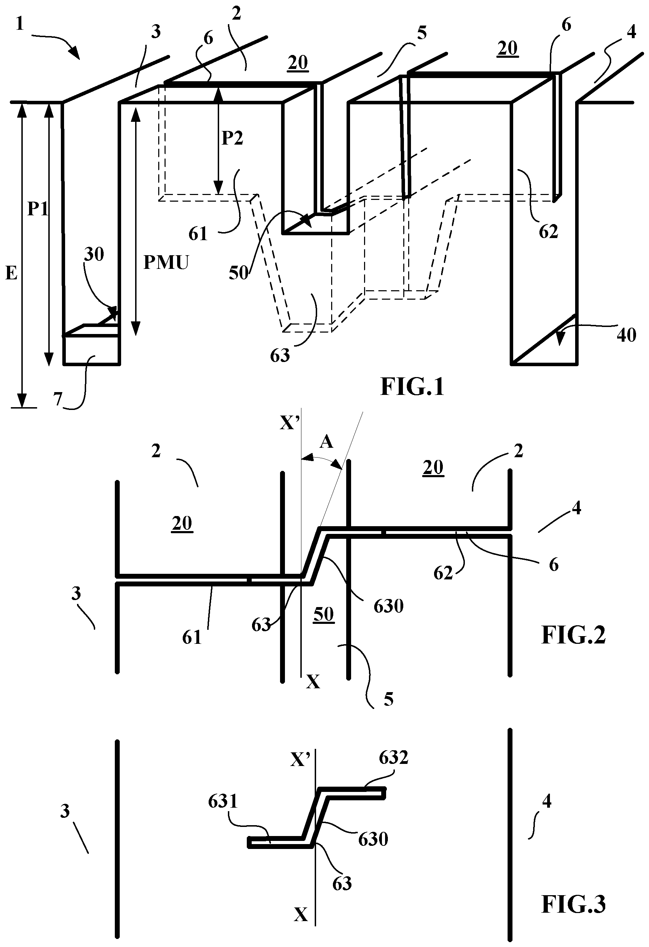

La figure 1 représente une vue en perspective d'une partie d'une bande de roulement selon l'invention. Dans cette première variante, on distingue sur cette bande 1 une nervure circonférentielle 2 délimitée par deux rainures principales circonférentielles 3, 4 de profondeur P1 égale dans le cas présent 16 mm. La bande 1 a une épaisseur totale E égale à 22 mm et une épaisseur PMU pour être usée égale à 14 mm. L'épaisseur PMU est mesurée à partir de la surface de roulement 20 à l'état neuf. En général, l'épaisseur à user PMU est appropriée pour maintenir une épaisseur suffisante et non nulle entre le fond 30, 40 des rainures principales 3, 4 respectivement et une armature de sommet du pneu (non représentée) sur laquelle est disposée la bande 1.

Cette nervure 2 comprend une face de contact 20 formant une partie de la surface de roulement de la bande de roulement, cette face de contact 20 étant destinée à venir en contact avec une chaussée lors d'un roulage.

En outre, la nervure 2 comprend une rainure secondaire 5 de largeur L2 et de profondeur P2 égale dans le cas présent à 12 mm. Cette rainure secondaire 5 est continue et orientée circonférentiellement et partage la face de contact 20 en deux parties de largeurs égales. La nervure 2 est coupée transversalement par une pluralité d'incisions 6 dont une seule est ici représentée. Chacune de ces incisions 6 comprend deux parties latérales 61, 62 disposées de chaque côté de la rainure secondaire 5, ces parties latérales d'incision ayant une profondeur moyenne égale à la profondeur P2 de la rainure secondaire 5.

Les rainures principales 3, 4 ont une largeur moyenne égale à 8 mm et la rainure secondaire 5 a une largeur moyenne inférieure (ici égale à 6 mm). La largeur moyenne de la nervure 2 est égale en moyenne à 66 mm ; cette largeur varie entre 65 mm et 68 mm.

Les parties latérales d'incision 61, 62 sont reliées entre elles par une incision formant une partie de liaison 63 s'ouvrant sur le fond 50 de la rainure secondaire 5 et se prolongeant radialement vers l'intérieur de la bande de roulement. La partie de liaison 63 s'étend dans l'épaisseur de la bande jusqu'à un niveau correspondant aux fonds 30, 40 des rainures principales 3, 4. Sur le fond 30 de la rainure 3 on voit un indicateur 7 destiné à prévenir l'usager d'une limite légale d'usage de la bande.

La figure 2 représente une vue en plan à l'état neuf de la bande de roulement montrée à la figure 1. Sur cette figure 2, on voit la trace sur la face de contact de la nervure des arêtes formées par l'incision de largeur ici égale à 0.4 mm. On voit que sur le fond 50 de la rainure secondaire 5, la partie de liaison 63 de l'incision 6 comprend une partie orientée 630 faisant un angle A au plus égal à 30°. L'angle A peut varier entre 14° et 27° selon le pas des motifs de la sculpture. Cette partie orientée 630 est située dans la partie centrale du fond de la rainure secondaire 5 et se prolonge par des parties latérales 631, 632 reliées aux parties 61 et 62 respectivement de l'incision 6.

La figure 3 montre une vue en plan de la bande de roulement représentée avec la figure 1 et la figure 2 après une usure ayant fait totalement disparaître la rainure secondaire 5. On constate que seule la partie de liaison 63 de l'incision 6 est encore présente et s'ouvre sur la surface de roulement à l'état usé. La présence de cette partie d'incision 6 renforce l'indication donnée par l'indicateur de limite d'usure selon laquelle la bande de roulement n'est pas usée jusqu'à sa limite d'usage nécessitant un retrait pour un renouvellement par rechapage ou par un nouveau pneu.

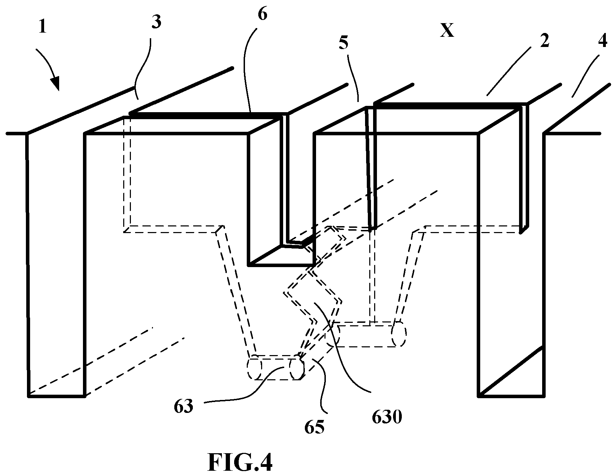

La figure 4 montre une vue en perspective d'une autre variante d'une bande de roulement 1 selon l'invention. Selon cette variante, la partie de liaison 63 de l'incision 6 comprend une portion 630 alignée dans la direction circonférentielle (correspondant à la direction XX' des rainures principales et secondaire). Cette portion 630 est formée avec une géométrie en zigzag dans la direction de la profondeur. En outre et pour limiter les effets mécaniques de concentration d'efforts pouvant générer des cassures dans la matière située au voisinage de l'extrémité la plus à l'intérieur de la partie de liaison, il est formé un élargissement 65 qui, dans le cas représenté, est de forme circulaire de diamètre égal à trois fois la largeur de l'incision 6.

Ce même élargissement peut également être formé continûment sur toute la longueur du fond de l'incision selon le besoin.

L'invention qui vient d'être décrite avec le support des exemples représentés ne saurait être limitée à ces exemples et il est clair que diverses modifications peuvent y être apportées sans toutefois sortir du cadre défini par les revendications.

## Revendications

1. Bande de roulement pour pneu de poids lourd, ayant une épaisseur de matière à user PMU, et comprenant :
- au moins deux rainures principales (3, 4) de profondeur P1 proche ou égale à PMU, ces rainures principales (3, 4) délimitant un élément de relief (2),
- au moins une rainure secondaire (5) de profondeur P2 inférieure à la profondeur P1 des rainures principales (3, 4), cette rainure secondaire (5) s'étendant de façon continue dans tout l'élément de relief (2) et comprenant un fond de rainure (50), chacune des rainures principales et secondaires étant orientées selon une direction principale circonférentielle ou quasiment circonférentielle et correspondant à la direction moyenne d'un écoulement de liquide dans chaque rainure,
- une pluralité d'incisions (6) formées dans l'élément de relief (2), chacune de ces incisions comprenant des parties latérales (61, 62) d'orientation oblique ou transversale et formées de part et d'autre de la rainure secondaire (5) et s'ouvrant dans les rainures principales (3, 4), ces parties latérales (61, 62) s'étendant jusqu'à une distance mesurée par rapport à la surface de roulement à l'état neuf qui est au plus égale à la profondeur P2 de la rainure secondaire (5), cette bande de roulement étant **caractérisée en ce que** ces parties latérales (61, 62) sont reliées entre elles par une partie de liaison (63), cette partie de liaison (63) s'étendant radialement vers l'intérieur de la bande à partir du fond (50) de la rainure secondaire (5) et jusqu'à une profondeur supérieure à la profondeur P2, cette partie de liaison (63) comprenant des portions d'incisions de même orientation que les parties latérales (61, 62) et au moins une portion d'incision (630) orientée suivant la direction principale de la rainure secondaire (5), c'est-à-dire en faisant un angle au plus égal à 30° avec la direction circonférentielle.

2. Bande de roulement selon la revendication 1 **caractérisée en ce que** la profondeur maximale des parties de liaison (63) est au moins égale à 90% de la profondeur P1 des rainures principales (3, 4)

3. Bande de roulement selon la revendication 1 ou la revendication 2 **caractérisée en ce que** la profondeur des rainures secondaires (5) est au moins égale à 50% de l'épaisseur de matière à user (PMU) et au plus égale à 90% de la même épaisseur PMU.

4. Bande de roulement selon l'une des revendications 1 à 3 **caractérisée en ce que** chaque portion d'incision (630) orientée suivant ou sensiblement suivant la direction principale de la rainure secondaire (5) est délimitée par des parois en vis-à-vis, ces parois étant pourvues de moyens de blocage limitant ainsi la diminution de la rigidité de la bande occasionnée par la présence des incisions.

5. Bande de roulement selon l'une des revendications 1 à 4 **caractérisée en ce que** chaque partie de liaison (63) est pourvue à son extrémité radialement à l'intérieur d'un élargissement.

6. Bande de roulement selon l'une des revendications 1 à 5 **caractérisée en ce que** la longueur de chaque partie de liaison (630) orientée suivant ou sensiblement suivant la direction principale de la rainure secondaire (5) est au moins égale à 5 mm.

7. Bande de roulement selon l'une des revendications 1 à 6 **caractérisée en ce que** la bande de roulement est pourvue d'au moins un dispositif (7) indicateur de l'usure limite légale et **en ce que** chaque partie de liaison (63) s'étend jusqu'à une profondeur maximale correspondant à la position de l'usure limite légale déterminée par ledit dispositif (7).

8. Pneu pour véhicule poids lourd pourvu d'une bande de roulement selon l'une quelconque des revendications 1 à 7.

## Patentansprüche

1. Laufstreifen für Lkw-Reifen mit einer zu verschleißenden Materialstärke PMU, umfassend:
- mindestens zwei Hauptrillen (3, 4) mit einer Tiefe P1 nahe oder gleich PMU, wobei diese Hauptrillen (3, 4) ein Reliefelement (2) begrenzen,
- mindestens eine Nebenrille (5) mit einer Tiefe P2, die geringer als die Tiefe P1 der Hauptrillen (3, 4) ist, wobei sich diese Nebenrille (5) durchgehend in dem gesamten Reliefelement (2) erstreckt und einen Rillengrund (50) umfasst, wobei jede der Haupt- und Nebenrillen entlang einer umfangsmäßigen oder nahezu umfangsmäßigen Hauptrichtung ausgerichtet sind, die der mittleren Richtung des Ablaufens von Flüssigkeit in jeder Rille entspricht,
- eine Vielzahl von Einschnitten (6), die in dem Reliefelement (2) ausgebildet sind, wobei jeder dieser Einschnitte schräg oder quer ausgerichtete Seitenteile (61, 62) umfasst, die beidseits der Nebenrille (5) ausgebildet sind, und in die Hauptrillen (3, 4) mündet, wobei sich diese Seitenteile (61, 62) bis zu einer Distanz, gemessen in Bezug auf die Lauffläche im Neuzustand, erstrecken, die höchstens gleich der Tiefe P2 der Nebenrille (5) ist, wobei dieser Laufstreifen **dadurch gekennzeichnet ist, dass** diese Seitenteile (61, 62) untereinander durch ein Verbindungsteil (63) verbunden sind, wobei sich dieses Verbindungsteil (63) vom Grund (50) der Nebenrille (5) ausgehend radial zum Inneren des Streifens hin und bis zu einer Tiefe, die größer als die Tiefe P2 ist, erstreckt, wobei dieses Verbindungsteil (63) Einschnittabschnitte, die genauso wie die Seitenteile (61, 62) ausgerichtet sind, und mindestens einen Einschnittabschnitt (630) umfasst, der entlang der Hauptrichtung der Nebenrille (5) ausgerichtet ist, d. h. einen Winkel von höchstens 30° zur Umfangsrichtung bildet.

2. Laufstreifen nach Anspruch 1, **dadurch gekennzeichnet, dass** die maximale Tiefe der Verbindungsteile (63) mindestens 90 % der Tiefe P1 der Hauptrillen (3, 4) beträgt.

3. Laufstreifen nach Anspruch 1 oder Anspruch 2, **dadurch gekennzeichnet, dass** die Tiefe der Nebenrillen (5) mindestens 50 % der zu verschleißenden Materialstärke (PMU) und höchstens 90% derselben Stärke PMU beträgt.

4. Laufstreifen nach einem der Ansprüche 1 bis 3, **dadurch gekennzeichnet, dass** jeder Einschnittabschnitt (630), der entlang oder annähernd entlang der Hauptrichtung der Nebenrille (5) ausgerichtet ist, durch gegenüberliegende Wände begrenzt wird, wobei diese Wände mit Hemmmitteln versehen sind, die somit die durch das Vorhandensein der Einschnitte bedingte Verringerung der Steifigkeit des Laufstreifens begrenzen.

5. Laufstreifen nach einem der Ansprüche 1 bis 4, **dadurch gekennzeichnet, dass** jedes Verbindungsteil (63) an seinem radial inneren Ende mit einer Verbreiterung versehen ist.

6. Laufstreifen nach einem der Ansprüche 1 bis 5, **dadurch gekennzeichnet, dass** die Länge jedes Verbindungsteils (630), das entlang oder annähernd entlang der Hauptrichtung der Nebenrille (5) ausgerichtet ist, mindestens 5 mm beträgt.

7. Laufstreifen nach einem der Ansprüche 1 bis 6, **dadurch gekennzeichnet, dass** der Laufstreifen mit mindestens einer Einrichtung (7) zum Anzeigen des gesetzlichen Grenzverschleißes versehen ist und dass sich jedes Verbindungsteil (63) bis zu einer maximalen Tiefe erstreckt, die der Position des von der Einrichtung (7) bestimmten gesetzlichen Grenzverschleißes entspricht.

8. Lkw-Reifen mit einem Laufstreifen nach einem der Ansprüche 1 bis 7.

## Claims

1. Tread for a heavy vehicle tyre, having a wearable thickness of material PMU and comprising:
- at least two main grooves (3, 4) of depth P1 close or equal to PMU, these main grooves (3, 4) delimiting a raised element (2),
- at least one secondary groove (5) of depth P2 less than the depth P1 of the main grooves (3, 4), this secondary groove (5) extending continuously throughout the raised element (2) and comprising a groove bottom (50), each of the main and secondary grooves being oriented in a circumferential or near-circumferential main direction and corresponding to the mean direction of a flow of liquid in each groove,
- a plurality of sipes (6) formed in the raised element (2), each of these sipes comprising lateral parts (61, 62) of oblique or transverse orientation and formed one each side of the secondary groove (5) and opening in the main grooves (3, 4), the lateral parts (61, 62) extend as far as a distance measured with respect to the tread surface in the new state which is at most equal to the depth P2 of the secondary groove (5), this tread band being **characterized in that** these lateral parts (61, 62) being connected to one another by a connecting part (63), this connecting part (63) being formed radially towards the inside of the tread from the bottom (50) of the secondary groove (5) and up to a depth greater than the depth P2, these connecting part (63) comprising parts of incisions having the same orientation than the lateral parts (61, 62) and at least a part of incision (630) oriented in the main direction of the secondary groove (5), namely making an angle at most equal to 30° with the circumferential direction.

2. Tread according to Claim 1, **characterized in that** the depth of the connecting parts (63) is at least equal to 90% of the depth P1 of the main grooves (3, 4) .

3. Tread according to Claim 1 or Claim 2, **characterized in that** the depth of the secondary grooves (5) is at least equal to 50% of the wearable thickness of material (PMU) and at most equal to 90% of the same thickness PMU.

4. Tread according to one of Claims 1 to 3, **characterized in that** each sipe portion (630) oriented in or substantially in the main direction of the secondary groove (5) is delimited by opposing walls, these walls being provided with immobilizing means thus limiting the reduction in tread rigidity caused by the presence of the sipes.

5. Tread according to one of Claims 1 to 4, **characterized in that** each connecting part (63) is provided with a widening at its radially inner end.

6. Tread according to one of Claims 1 to 5, **characterized in that** the length of each connecting part (630) oriented in or substantially in the main direction of the secondary groove (5) is at least equal to 5 mm.

7. Tread according to one of Claims 1 to 6, **characterized in that** the tread is provided with at least one legal wear limit indicator device (7) and **in that** each connecting part (63) extends as far as a depth corresponding to the position of the legal wear limit determined by the said device (7).

8. Tyre for a heavy vehicle provided with a tread according to any one of Claims 1 to 7.
